# EUROPÄISCHE PATENTSCHRIFT

(11) **EP 0 802 449 B1**
(45) Veröffentlichungstag und Bekanntmachung des Hinweises auf die Patenterteilung: **23.10.2002**
(21) Anmeldenummer: 96810235.0
(22) Anmeldetag: 16.04.1996
(51) Int. Cl.: G03B 27/80, G03D 15/00

(54) **Verfahren zur Herstellung von Kopien von fotografischen Kopiervorlagen**
Method of producing copies of photographic originals
Méthode de production de copies à partir d'originaux photographiques

(43) Veröffentlichungstag der Anmeldung: 22.10.1997
(73) Patentinhaber: GRETAG IMAGING AG, 8105 Regensdorf (CH)
(72) Erfinder: Kraft, Walter, CH-8049 Zürich (CH); Zolliker, Peter, CH-8157 Dielsdorf (CH)
(74) Vertreter: Schwabe - Sandmair - Marx

(56) Entgegenhaltungen:
- DE-A- 2 939 681
- DE-A- 3 408 765
- US-A- 3 797 719

## Beschreibung

Die Erfindung betrifft ein Verfahren zur Herstellung von Kopien von fotografischen Kopiervorlagen gemäss dem Oberbegriff des unabhängigen Patentanspruchs.

Die Herstellung von Kopien von fotografischen Kopiervorlagen findet heutzutage mehr oder weniger vollautomatisch statt. Der am häufigsten vorkommende Fall ist dabei das Aufkopieren von belichteten Bildfeldern von Negativfilmen auf lichtempfindliches Fotopapier, im folgenden wird daher beispielhaft auch nur dieser Fall betrachtet. Der Vorgang erfolgt üblicherweise derart, dass die einzelnen Bildfelder der Negativfilme in einer Messstation ausgemessen werden, anschliessend mit Hilfe der gewonnenen Messdaten die Daten für die Belichtungssteuerung ermittelt werden, sodass schliesslich in der Belichtungsstation beim Aufbelichten die jeweiligen Bildfelder des Negativfilms mit den erforderlichen Kopierlichtmengen auf das lichtempfindliche Fotopapier abgebildet werden.

Mittlerweile ist es bei der automatischen Auftragsbearbeitung auch schon üblich, dass die hierbei zum Einsatz kommenden Kopiergeräte (Printer) in der Lage sind zwischen kopierwürdigen und kopierunwürdigen Bildfeldern zu unterscheiden. Die Entscheidung, ob ein Negativ kopierwürdig oder kopierunwürdig ist, kann dabei von verschiedenen Kriterien beeinflusst werden (z.B. Kontrast, Belichtung, Bildschärfe, etc.). Völlig unabhängig davon, welches Kriterium oder welche Kriterien bei der Entscheidung über die Kopierwürdigkeit herangezogen werden, handelt es sich bei dieser Entscheidung um eine "ja/nein"-Entscheidung - entweder wird das Bildfeld kopiert oder nicht. Für die Festlegung, wann ein Bildfeld kopierwürdig ist und wann nicht, steht dem Fachmann im allgemeinen ein Satz einstellbarer Parameter zur Verfügung. Dabei hat es sich jedoch herausgestellt, dass immer wieder Kunden unzufrieden damit sind, dass von einigen ihrer Bildfelder keine Kopien hergestellt worden sind, weil diese bei der obengenannten "ja/nein"-Entscheidung durchgefallen sind, also als kopierunwürdig eingestuft worden sind, andererseits diese Bildfelder bei Betrachtung des Negativfilms dem Kunden durchaus das Gefühl vermitteln, als würde beim Kopieren des entsprechenden Bildfelds eine akzeptable Kopie entstehen können.

Diese Situtation ist - systemtechnisch betrachtet - bei einer einfachen "ja/nein"-Entscheidung vom Grundsatz her jedoch nicht anders möglich. Irgendwo muss einfach ein Kriterium bzw. eine Anzahl von Kriterien festgelegt werden, mit deren Hilfe entschieden wird, ob ein Bildfeld als kopierwürdig oder als kopierunwürdig eingestuft wird. Die obengenannte Kritik der Kunden - nämlich dass von einigen Bildfeldern keine Kopien hergestellt worden sind - hat deshalb zum Teil dazu geführt, dass die Kriterien bei der Entscheidung über die Kopierwürdigkeit eines Bildfelds entsprechend "aufgeweicht" worden sind. Als Folge der "aufgeweichten" Kriterien waren nun in einzelnen Aufträgen einige wenige nicht akzeptable Kopien, was wiederum zu Unzufriedenheit beim Kunden geführt hat, insbesondere deshalb, weil der Kunde - oder bei entsprechender Kulanz die Auftragsannahmestelle (z.B. das Fotofachgeschäft) - sämtliche Kopien, auch die nicht akzeptablen, bezahlen musste.

Es ist daher eine Aufgabe der Erfindung, die Zufriedenheit bei dem Kunden bzw. der Auftragsannahmestelle zu erhöhen. Andererseits soll dem Kunden auch das Gefühl vermittelt werden, dass in Fällen, in denen nicht zweifelsfrei festgestellt werden kann, dass das entsprechende Bildfeld eindeutig kopierunwürdig ist, eine Kopie erstellt wird, diese jedoch nicht in Rechnung gestellt wird. Gleichzeitig soll natürlich die vollautomatische Bearbeitung der Kundenaufträge nach wie vor möglich sein.

Erfindungsgemäss wird daher vorgeschlagen, dass in einem Prüfschritt die jeweilige ausgemessene Kopiervorlage einer von mindestens drei Kategorien von Kopiervorlagen zugeordnet wird, nämlich entweder einer ersten Kategorie, welche eindeutig kopierwürdige Kopiervorlagen umfasst, oder einer zweiten Kategorie, welche eindeutig kopierunwürdige Kopiervorlagen umfasst, oder einer dritten Kategorie, welche solche Kopiervorlagen umfasst, die weder eindeutig kopierwürdig noch eindeutig kopierunwürdig sind. Sowohl solche Kopiervorlagen, die der ersten Kategorie zugeordnet worden sind, als auch solche Kopiervorlagen, die der dritten Kategorie zugeordnet worden sind, werden auf fotografisches Kopiermaterial aufkopiert. Allerdings werden die Kopien von Kopiervorlagen, die der dritten Kategorie zugeordnet worden sind, als zu dieser Kategorie gehörend kenntlich gemacht und bei der Berechnung des Preises für die Bearbeitung des entsprechenden Kundenauftrags nicht berücksichtigt.

In bevorzugter Weise werden Kopien von Kopiervorlagen, die der dritten Kategorie zugeordnet worden sind, mit Hilfe eines Rückseitendruckers, eines Aufklebers oder eines Fettstifts kenntlich gemacht, sodass der Kunde optisch sofort erkennen kann, dass es sich bei dieser Kopie um eine Kopie eines nicht eindeutig als kopierwürdig eingestuften Negativbildfelds handelt, und somit die Erstellung dieser Kopie bei der Berechnung des Preises für die Bearbeitung des Auftrags nicht berücksichtigt worden ist (Gratiskopie).

Eine weitere Verfahrensvariante zeichnet sich dadurch aus, dass die Zuordnung der Kopiervorlage zur ersten, zweiten oder dritten Kategorie vor der Berechnung der erforderlichen Kopierlichtmengen erfolgt, und dass bei Kopiervorlagen, die der zweiten Kategorie zugeordnet werden, die Berechnung der Kopierlichtmengen überhaupt nicht initiiert wird. Dies heisst nichts Anderes, als dass bei eindeutig kopierunwürdigen Kopiervorlagen die Berechnung der Kopierlichtmengen gar nicht erst erfolgt, wodurch der damit verbundene Rechenaufwand nicht betrieben werden muss.

Eine weitere Verfahrensvariante zeichnet sich dadurch aus, dass vor dem Prüfschritt, in welchem die Kopiervorlage der ersten, zweiten oder dritten Kategorie zugeordnet wird, in einem Vorprüfschritt die Kopiervorlage daraufhin untersucht wird, ob sie überhaupt belichtet ist bzw. ob die Kopiervorlage völlig geschwärzt ist. Dabei handelt es sich quasi um eine grobe Voruntersuchung der Kopiervorlage. Im Klartext bedeutet dies: Vor der genaueren Untersuchung der Kopiervorlage und der Zuordnung zu einer der Kategorien wird die Kopiervorlage zunächst daraufhin untersucht, ob sie überhaupt Bildinformation enthält bzw. ob die Kopiervorlage nicht völlig geschwärzt ist (was z.B. die Folge von versehentlichem Öffnen der Verschlussklappe eines Fotoapparates bei eingelegtem Film sein kann). In diesen Fällen braucht natürlich weder eine genauere Untersuchung der Kopiervorlage zu erfolgen, sondern es erfolgt direkt die Feststellung, dass es sich hierbei um eine kopierunwürdige Vorlage handelt. Dadurch kann der Aufwand für die genauere Untersuchung und Zuordnung der Kopiervorlage zu einer der drei Kategorien eingespart werden.

Im folgenden wird die Erfindung anhand der Zeichnung näher erläutert. Es zeigen in schematischer Darstellung:
- Fig. 1: ein Ausführungsbeispiel eines Kopiergeräts, mit welchem das erfindungsgemässe Verfahren durchgeführt werden kann,
- Fig. 2: ein Ablaufdiagramm, welches im wesentlichen die Reihenfolge der Schritte zeigt, wie sie im Kopiergerät gemäss Fig. 1 erfolgen und eine Ausführungsvariante des erfindungsgemässen Verfahrens beinhalten.

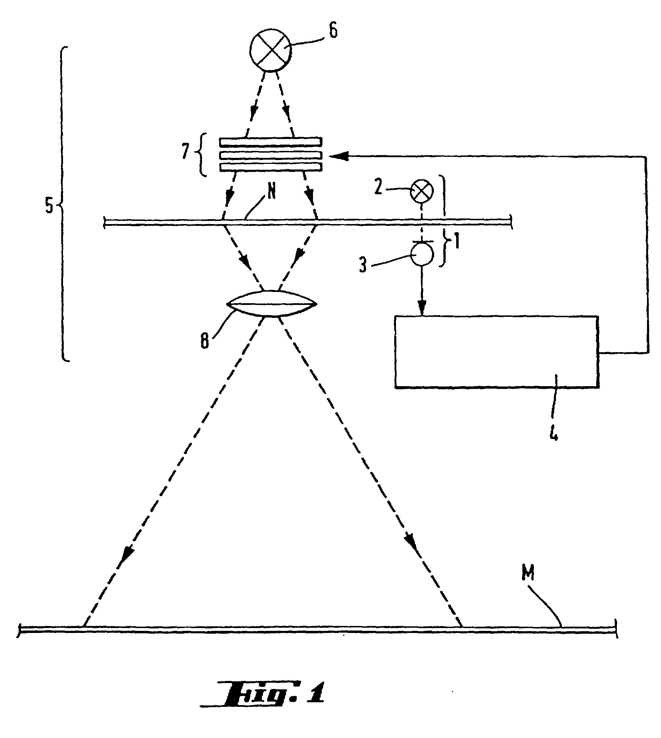

Das in Fig. 1 gezeigte Ausführungsbeispiel eines Kopiergeräts, mit welchem das erfindungsgemässe Verfahren durchgeführt werden kann, umfasst im wesentlichen eine Messstation 1, in welcher eine (hier) transmissive Kopiervorlage, beispielsweise ein Negativfilm N, mit Hilfe einer Abtastlichtquelle 2 bereichsweise, vorzugsweise punktweise, beleuchtet wird. Jenseits des Negativfilms N ist ein photoelektrischer Empfänger 3 angeordnet, welcher das vom Negativfilm N kommende Abtastlicht empfängt. Der Negativfilm N kann dabei in jedem einzelnen Abtastbereich in den drei Grundfarben blau, grün und rot ausgemessen werden, heutzutage sind allerdings bereits spektrale Messungen Stand der Technik.

Das jeweilige von dem photoelektrischen Empfänger 3 kommende Signal wird einer Rechen- und Steuereinheit 4 zugeführt. Die Funktionsweise dieser Rechen- und Steuereinheit 4 wird weiter unten noch genauer erläutert. Zumindest soll an dieser Stelle aber festgehalten werden, dass die Rechen- und Steuereinheit 4 die einzelnen in den Belichtungsstrahlengang einschwenkbaren Servo-Farbverschlüsse 7 des Abbildungssystems 5 steuert. Dieses Abbildungssystem 5 umfasst im Ganzen eine Abbildungslichtquelle 6, die bereits erwähnten Servo-Farbverschlüsse 7, sowie eine im Strahlengang nach dem Negativfilm N angeordnete Abbildungsoptik 8. Das Abbildungssystem 5 bildet das jeweilige zuvor in der Messstation 1 ausgemessene Bildfeld des Negativfilms N auf lichtempfindliches Kopiermaterial, beispielsweise auf Fotopapier M, ab.

Soweit entspricht das mit diesem Kopiergerät durchführbare Verfahren dem Stand der Technik. Es ist darüberhinaus auch noch bekannt - wie eingangs bereits erläutert - die Kopiervorlagen daraufhin zu untersuchen, ob sie überhaupt kopierwürdig sind oder nicht. Allerdings mündet diese Untersuchung bisher in eine "ja/nein"-Entscheidung, also in eine Entscheidung für oder gegen die Kopierwürdigkeit des jeweiligen Bildfelds auf dem Negativfilm N.

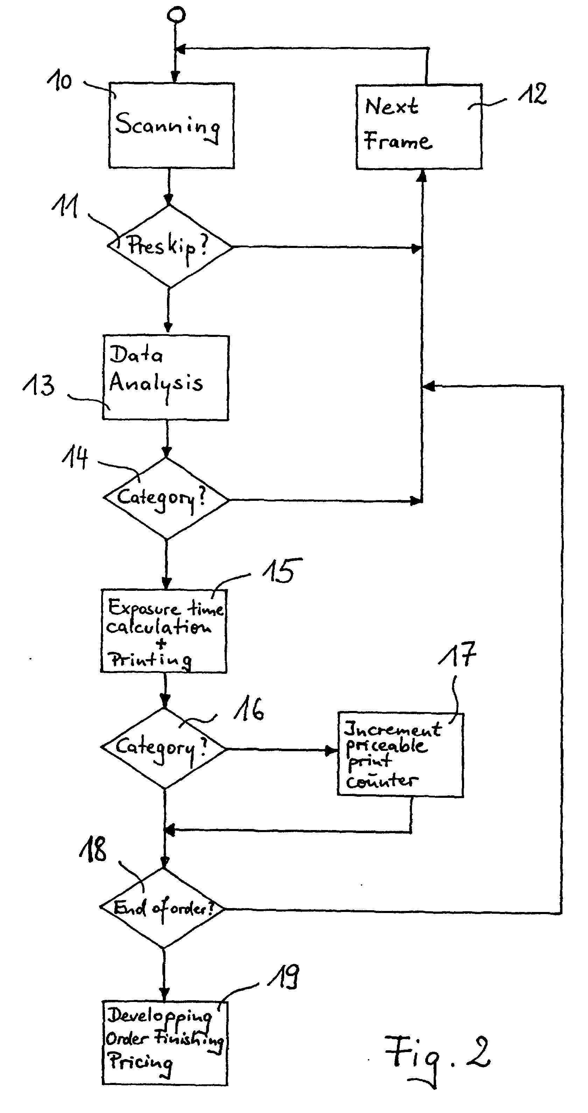

In diesem Punkt weicht nun das erfindungsgemässe Verfahren deutlich ab, indem es nämlich - differenzierter als das bekannte Verfahren - die einzelnen Bildfelder auf dem Negativfilm hinsichtlich ihrer Kopierwürdigkeit einer von mindestens drei verschiedenen Kategorien zuordnet: Entweder einer ersten Kategorie, deren Bildfelder eindeutig kopierwürdig sind, oder einer zweiten Kategorie, deren Bildfelder eindeutig kopierunwürdig sind, oder einer dritten Kategorie, deren Bildfelder weder eindeutig kopierwürdig noch eindeutig kopierunwürdig sind. Sowohl eindeutig kopierwürdige Bildfelder wie auch solche Bildfelder, die weder eindeutig kopierwürdig noch eindeutig kopierunwürdig sind, also die Bildfelder der ersten und der dritten Kategorie, werden in der Kopierstation 5 auf das Fotopapier M aufkopiert. Allerdings werden Kopien von Bildfeldern, die der dritten Kategorie zugeordnet worden sind, auch als solche kenntlich gemacht und bei der Berechnung des Preises für die Bearbeitung eines Kundenauftrags nicht berücksichtigt (Gratiskopien). Die Abläufe sollen im folgenden mit Hilfe des in Fig. 2 dargestellten Ablaufdiagramms noch etwas genauer erläutert werden. Dieses Ablaufdiagramm stellt die Abläufe in dem Kopiergerät dar und umfasst eine Ausführungsvariante des erfindungsgemässen Verfahrens.

Zunächst erfolgt in einem Schritt 10, der mit "Scanning" bezeichnet ist, die Abtastung der Kopiervorlage, also beispielsweise eines Bildfelds des Negativfilms N (Fig. 1). Diese Abtastung erfolgt in der Messstation 1 (Fig. 1) mit Hilfe der Abtastlichtquelle 2 und dem photoelektrischen Empfänger 3. Nach dem Abtasten des Bildfelds erfolgt in einem Vorprüfschritt 11, der mit "Preskip" bezeichnet ist, mit Hilfe der bei der Abtastung gewonnenen Messdaten eine Untersuchung daraufhin, ob der Film an dieser Stelle überhaupt ein belichtetes Bildfeld aufweist (also ob nur die Filmmaske vorhanden ist und keinerlei Belichtung) bzw. ob das Bildfeld völlig geschwärzt ist (wie dies beispielsweise bei versehentlichem Öffnen der Verschlussklappe für das Einlegen des Films bei einem Fotoapparat vorkommen kann). Trifft einer dieser beiden Fälle zu, so wird eine entsprechende Information gespeichert, damit dieses Negativ später in der Abbildungsstation 5 (Fig. 1) nicht abgebildet wird. Anschliessend wird das nächste Bildfeld ausgemessen. Dies ist durch den Schritt 12, der mit "Next Frame" bezeichnet ist, dargestellt. Es ist klar, dass in diesem Fall auch keinerlei weitere Analyse der Messdaten erfolgen muss und natürlich auch keine Belichtungszeiten berechnet werden müssen.

Trifft keiner dieser beiden Fälle zu, so erfolgt in einem Schritt 13, der mit "Data Analysis" bezeichnet ist, eine Analyse der Messdaten des Bildfelds. Dabei können verschiedene Kriterien (z.B: Kontrast, mittlere Dichte, Wichtung verschiedener Zonen innerhalb des Bildfelds, Abschwächung des Einflusses von grösseren zusammenhängenden Flächen gleicher Dichte, etc.) und Auswertungsphilosphien berücksichtigt werden, die für sich genommen bekannt sind. Beispielsweise kann die Analyse der Messdaten so erfolgen, wie dies in der EP-A-0,012,713, der DE-A-26 36 337, der DE-B-15 97 066. der DE-A25 35 034 oder in "GRETAG 3141 Scanning Color Printer, Operating Manual Program 8.30 (DG 500)" beschrieben ist. Nach der Analyse der Messdaten erfolgt die Zuordnung des Bildfelds zu einer der drei Kategorien. Dies ist durch den Schritt 14 angedeutet, der mit "Category" bezeichnet ist. Wird das Bildfeld der zweiten Kategorie zugeordnet, also der Kategorie mit den eindeutig kopierunwürdigen Bildfeldern, so wird eine entsprechende Information gespeichert, damit dieses Bildfeld später in der Abbildungsstation 5 (Fig. 1) nicht abgebildet wird. Es ist klar, dass in diesem Fall auch keine Belichtungszeiten berechnet werden müssen, somit also recht erheblicher Rechenaufwand eingespart wird. Anschliessend wird das nächste Bildfeld des Negativfilms N ausgemessen. Dies ist durch den Schritt 12 dargestellt, der mit "Next Frame" bezeichnet ist.

Wird hingegen das Bildfeld der ersten Kategorie zugeordnet, also der Kategorie mit den eindeutig kopierwürdigen Bildfeldern, oder der dritten Kategorie, also der Kategorie mit den Bildfeldern, die weder eindeutig kopierwürdig noch eindeutig kopierunwürdig sind, so werden in einem Schritt 15, der mit "Exposure time calculation + Printing" bezeichnet ist, die Belichtungszeiten berechnet, die dann zur Steuerung der Servo-Farbverschlüsse 7 (Fig. 1) bei der Aufbelichtung des Bildfelds auf das Fotopapier M (Fig. 1) herangezogen werden. Die Schritte 11 bis 16 werden allesamt in der Rechen- und Steuereinheit 4 (Fig. 1) durchgeführt. Anschliessend erfolgt in einem Schritt 16, der mit "Category" bezeichnet ist, erneut eine Abfrage daraufhin, ob es sich bei dem aufbelichteten Bild um eine Kopie von einem Bildfeld der ersten Kategorie handelt, also der Kategorie mit den eindeutig kopierwürdigen Bildfeldern oder um eine Kopie von einem Bildfeld der dritten Kategorie, also der Kategorie mit den weder eindeutig kopierwürdigen noch eindeutig kopierunwürdigen Bildfeldern. Handelt es sich um eine Kopie von einem Bildfeld der ersten Kategorie, also um ein eindeutig kopierwürdiges Bildfeld, so wird in einem Schritt 17, der mit "Increment priceable print counter" bezeichnet ist, ein Zähler inkrementiert, der die später in Rechnung zu stellenden Kopien zählt. Handelt es sich hingegen um eine Kopie von einem Bildfeld der dritten Kategorie, also um ein weder eindeutig kopierwürdiges noch kopierunwürdiges Bildfeld, so wird dieser Zähler nicht erhöht. Denn obwohl dieses Bildfeld auf Fotopapier M aufkopiert worden ist, erfolgt dieses Aufkopieren ja für den Kunden gratis. Darüberhinaus werden solche Kopien auch besonders gekennzeichnet, indem zum Beispiel mittels eines Rückseitendruckers auf die Rückseite solcher Kopien das Wort "gratis" aufgedruckt wird, oder indem ein entsprechender Aufkleber auf solche Kopien aufgebracht wird, oder indem solche Kopien mit einem Fettstift gekennzeichnet werden (der dann vom Kunden wieder entfernt werden kann), oder aber in einer sonstigen geeigneten Art und Weise.

Anschliessend wird in einem Schritt 18, der mit "End of order" gekennzeichnet ist, überprüft, ob es sich um das letzte Bild eines Kundenauftrags handelt. Ist dies nicht der Fall, wird das nächste Bildfeld bearbeitet (Schritt 12, "Next Frame"). Ist jedoch das Ende eines Kundenauftrags erreicht, erfolgen noch mehrere Schritte, nämlich das Entwickeln des belichteten Fotopapiers, gegebenenfalls das Zerschneiden des belichteten und entwickelten Fotopapiers in einzelne Kopien, bzw. das Zerschneiden der Negativfilme in einzelne Streifen (üblicherweise in Streifen mit drei bis vier Bildfeldern), sofern dies nicht bereits vorher erfolgt ist. Ausserdem können die Negativstreifen zusammen mit den zugehörigen Kopien in eine Auftragstasche verpackt werden, und der Preis für die Bearbeitung des Kundenauftrags kann auf der Auftragstasche vermerkt werden. Dies alles ist in dem Schritt 19 zusammengefasst, der mit "Developping, Order Finishing, Pricing" bezeichnet ist. Bei der Berechnung des Preises für die Bearbeitung des Kundenauftrags wird der Stand des Zählers abgefragt, der nur die Kopien von eindeutig kopierwürdigen Bildfeldern zählt (Schritt 17), also von solchen Bildfeldern, welche der ersten Kategorie zugeordnet worden sind. Dies ist aber die grosse Mehrzahl aller anfallenden Kopien.

## Patentansprüche

1. Verfahren zur Herstellung von Kopien von fotografischen Kopiervorlagen, bei welchem Verfahren die jeweilige Kopiervorlage (N) bereichsweise, insbesondere punktweise, ausgemessen wird und mit Hilfe der so gewonnenen Messdaten in einem Prüfschritt (11,14) aufgrund vorgegebener, mittels einstellbarer Parameter festgelegten, Kriterien entschieden wird, ob die Kopiervorlage kopierwürdig ist oder nicht, und bei welchem Verfahren aufgrund dieser Entscheidung die jeweilige Kopiervorlage auf fotografisches Kopiermaterial aufkopiert wird oder nicht, **dadurch gekennzeichnet, dass** in dem Prüfschritt (11,14) die jeweilige ausgemessene Kopiervorlage einer von mindestens drei Kategorien von Kopiervorlagen zugeordnet wird, nämlich entweder einer ersten Kategorie, welche eindeutig kopierwürdige Kopiervorlagen umfasst, oder einer zweiten Kategorie, welche eindeutig kopierunwürdige Kopiervorlagen umfasst, oder einer dritten Kategorie, welche solche Kopiervorlagen umfasst, die weder eindeutig kopierwürdig noch eindeutig kopierunwürdig sind, und dass sowohl solche Kopiervorlagen, die der ersten Kategorie zugeordnet worden sind, als auch solche Kopiervorlagen, die der dritten Kategorie zugeordnet worden sind, auf fotografisches Kopiermaterial (M) aufkopiert werden, wobei die Kopien von Kopiervorlagen, die der dritten Kategorie zugeordnet worden sind, als zu dieser Kategorie gehörend kenntlich gemacht und bei der Berechnung des Preises für die Bearbeitung des Kundenauftrags nicht berücksichtigt werden.

2. Verfahren nach einem der Ansprüche 1, **dadurch gekennzeichnet, dass** Kopien von Kopiervorlagen, die der dritten Kategorie zugeordnet worden sind, mit Hilfe eines Rückseitendruckers, eines Aufklebers oder einer Fettstifts, kenntlich gemacht werden.

3. Verfahren nach einem der Ansprüche 1 oder 2, **dadurch gekennzeichnet, dass** die Zuordnung der Kopiervorlage zur ersten, zweiten oder dritten Kategorie vor der Berechnung der erforderlichen Kopierlichtmengen erfolgt, und dass bei Kopiervorlagen, die der zweiten Kategorie zugeordnet werden, die Berechnung der Kopierlichtmengen überhaupt nicht initiiert wird.

4. Verfahren nach einem der Ansprüche 1 bis 3, **dadurch gekennzeichnet, dass** vor dem Prüfschritt (14), in welchem die Kopiervorlage der ersten, zweiten oder dritten Kategorie zugeordnet wird, in einem Vorprüfschritt (11) die Kopiervorlage daraufhin untersucht wird, ob sie überhaupt belichtet ist bzw. ob die Kopiervorlage völlig geschwärzt ist.

## Claims

1. Method of producing prints from photographic originals, in which method the respective photographic original (N) is evaluated by area, in particular on a point basis, and a decision is made during a test step (11, 14), with the aid of the resultant measurement data, on the basis of predeterminable criteria set up by variable parameters, as to whether the photographic original is worth printing or not, and in which method the respective photographic original is printed onto photographic printing material or not depending on this decision, **characterised in that**, at the test step (11, 14), the respective evaluated photographic original is assigned to one of at least three categories of photographic originals, namely either a first category for photographic originals that are definitely printworthy, or a second category for photographic originals that are definitely unprintworthy, or a third category for photographic originals that are neither definitely printworthy nor definitely unprintworthy, and both the photographic originals assigned to the first category and the photographic originals assigned to the third category are printed onto photographic printing material (M) and the prints from photographic originals assigned to the third category are visibly marked to indicate that they belong to this category and are not included when the price of processing the customer's order is calculated.

2. Method as claimed in claim 1, **characterised in that** prints from photographic originals assigned to the third category are visibly marked with the aid of a duplex printer, by means of a sticker or with a marker pen.

3. Method as claimed in one of claims 1 or 2, **characterised in that** the photographic original is assigned to the first, second or third category before computing the requisite exposures times and the computation of the exposure times is not run at all for photographic originals assigned to the second category.

4. Method as claimed in one or more of claims 1 to 3, **characterised in that**, prior to the test step (14) at which the photographic original is assigned to the first, second or third category, the photographic original is inspected in a pre-test step (11) at which it is ascertained whether it has actually been exposed or whether the photographic original is completely blackened.

## Revendications

1. Procédé de réalisation de tirages d'originaux photographiques, procédé dans lequel chaque original (N) est analysé par zones, en particulier point par point, et, à l'aide des données de mesure ainsi recueillies, il est décidé dans une étape de contrôle (11, 14), sur la base de critères prédéfinis fixés au moyen de paramètres réglables, si l'original est apte au tirage ou non, et procédé dans lequel, en fonction de cette décision, l'original correspondant est tiré ou non sur un support de tirage photographique, **caractérisé en ce que**, dans l'étape de contrôle (11, 14) l'original analysé est classé dans une d'au moins trois catégories d'originaux, à savoir soit dans une première catégorie qui regroupe des originaux incontestablement aptes au tirage, soit dans une deuxième catégorie qui regroupe des originaux incontestablement inaptes au tirage, soit dans une troisième catégorie qui regroupe les originaux qui ne sont ni incontestablement aptes au tirage ni incontestablement inaptes au tirage, et **en ce qu'**aussi bien les originaux qui ont été classés dans la première catégorie que les originaux qui ont été classés dans la troisième catégorie sont tirés sur un support de tirage photographique (M), les tirages d'originaux classés dans la troisième catégorie étant repérés comme appartenant à cette catégorie et n'étant pas pris en compte lors du calcul du prix du traitement de la commande de tirage.

2. Procédé selon la revendication 1, **caractérisé en ce que** les tirages d'originaux qui ont été classés dans la troisième catégorie sont repérés au moyen d'une impression au verso, d'un autocollant ou d'un crayon gras.

3. Procédé selon une des revendications 1 ou 2, **caractérisé en ce que** le classement de l'original dans la première, deuxième ou troisième catégorie a lieu avant le calcul des quantités de lumière de tirage nécessaires, et **en ce que**, pour les originaux qui sont classés dans la deuxième catégorie, le calcul des quantités de lumière de tirage n'est pas effectué.

4. Procédé selon une des revendications 1 à 3, **caractérisé en ce qu'**avant l'étape de contrôle (14) où l'original est classé dans la première, deuxième ou troisième catégorie, on vérifie dans une étape de contrôle préalable (11) s'il a bien été exposé ou, respectivement, si l'original est complètement noirci.
